# EUROPÄISCHE PATENTANMELDUNG

(11) **EP 1 574 946 A2**
(43) Veröffentlichungstag der Anmeldung: **14.09.2005**
(21) Anmeldenummer: 05005282.8
(22) Anmeldetag: 10.03.2005
(51) Int. Cl.: G06F 3/14

(54) **Computer mit einem Anschluss zur Videosignalausgabe**

(30) Priorität: 11.03.2004 DE 202004003700 U
(71) Anmelder: Medion AG, 45127 Essen (DE)
(72) Erfinder: Reineke, Andreas, 33100 Paderborn (DE)
(74) Vertreter: Grünecker, Kinkeldey, Stockmair & Schwanhäusser Anwaltssozietät

(57) **Zusammenfassung**

Die Erfindung betrifft einen Computer mit einem SCART-Anschluss zur einfachen Ausgabe hochqualitativer Audio- und Videosignale an ein Unterhaltungselektronikgerät, insbesondere ein Fernsehgerät. Durch die Verwendung eines Steckanschlusses mit separaten Pins für jede Videosignalkomponente in einer einzigen Steckvorrichtung ist ein Bildsignal hoher Qualität in einfacher Weise ausgegebbar.

## Beschreibung

Die Erfindung betrifft einen Computer, der mit einer Steckvorrichtung zum Anschluss einer Bildwiedergabevorrichtung ausgestattet ist.

Personal-Computer (PCs) sind zur Wiedergabe von Bilddaten mit einer externen Bildwiedergabevorrichtung verbindbar. Zu diesem Zweck sind PCs mit einer oder mehreren Steckvorrichtungen ausgestattet, über die die Bildwiedergabevorrichtung an den PC anschließbar ist. Als Bildwiedergabevorrichtung dient im allgemeinen ein Computermonitor.

Mit zunehmender Leistungsfähigkeit der in einem PC angeordneten Recheneinheit wird dieser vermehrt zur Verarbeitung von Audio- und Videodaten eingesetzt und mit Unterhaltungselektronikgeräten verbunden. Unterhaltungselektronikgeräte, insbesondere Videorekorder oder Fernsehgeräte, können jedoch das von Computern ausgegebene Monitorsignal nicht verarbeiten. Aus diesem Grund sind zur Audio- und Videosignalverarbeitung geeignete Computer im allgemeinen zusätzlich mit einem S-Video-Anschluss und/oder einem Compositesignal-Anschluss ausgestattet.

Ein Composite-Videosignal fasst alle Komponenten des Bildsignals in einem einzigen Signal zusammen. Ein solches Compositesignal wird unter anderem zur Ausstrahlung der heutigen analogen Fernsehsignale verwendet. Das Composite-signal enthält eine Helligkeitskomponente (Luminanz) und zwei Farbkomponenten (Chrominanz).

Zur Verbesserung der Bildqualität werden bei dem S-Video-Standard die Luminanzkomponente und die Farbkomponenten getrennt voneinander übertragen. Ein S-Video-Kabel besteht aus diesem Grund aus einem Kabelpaar, wobei ein Kabel zur Übertragung des Luminanzsignals und das zweite Kabel zur Übertragung der Farbkomponenten dient. Durch die Trennung der Luminanz und der Farbkomponenten lässt sich ein Übersprechen vermeiden und eine höhere Bildqualität erzielen.

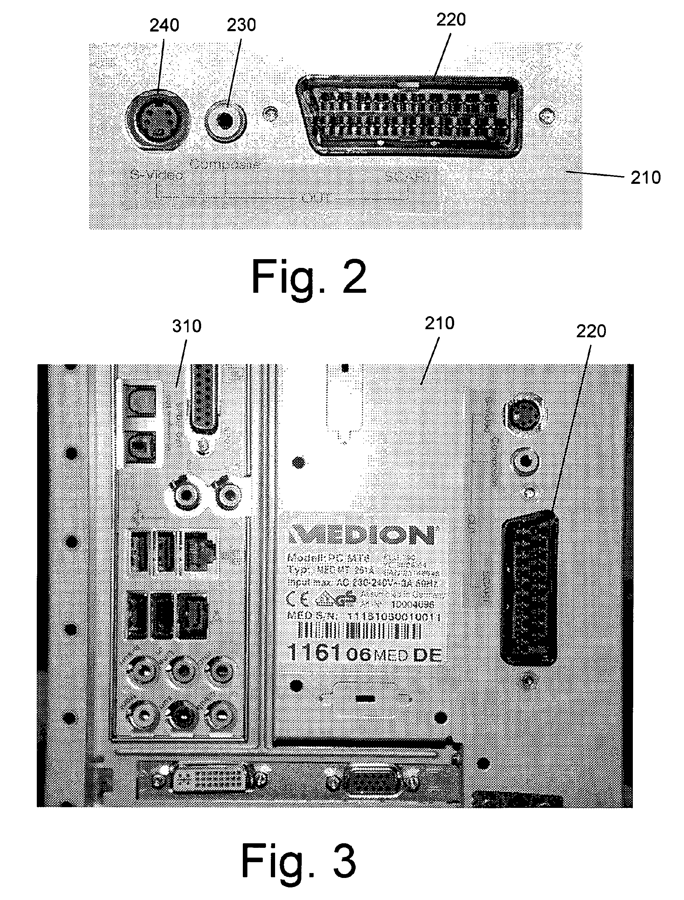

Beispiele für übliche Anschlussstecker für ein Composite-Kabel und ein S-Video-Kabel sind in Fig. 2 dargestellt. Neben dem Composite-Anschluss 230 ist ein Vier-Pin-Anschluss für das S-Video-Signal dargestellt.

Für die Übertragung von Audio- und Videosignalen zwischen Videorekordern und Fernsehgeräten wird heutzutage ein Steckanschluss eingesetzt, der eine noch bessere Bildqualität ermöglicht. Zu diesem Zweck wird ein sogenannter SCART-Anschluss verwendet. Bei dem SCART-Anschluss werden alle Videosignal-Komponenten separat übertragen, eine kombinierte Übertragung unterschiedlicher Farbkomponenten in einem einzigen Signal wird dabei vermieden. Aufgrund der höheren Bildqualität hat sich der SCART-Anschluss zur Verbindung von HeimVideogeräte allgemein durchgesetzt, da er alle nötigen Signale in einem einzigen mehrpoligen Stecker zusammenfasst und einen herstellerübergreifenden Standard bildet. Außerdem schließt seine Bauform ein Fehlbedienung des Steckers aus.

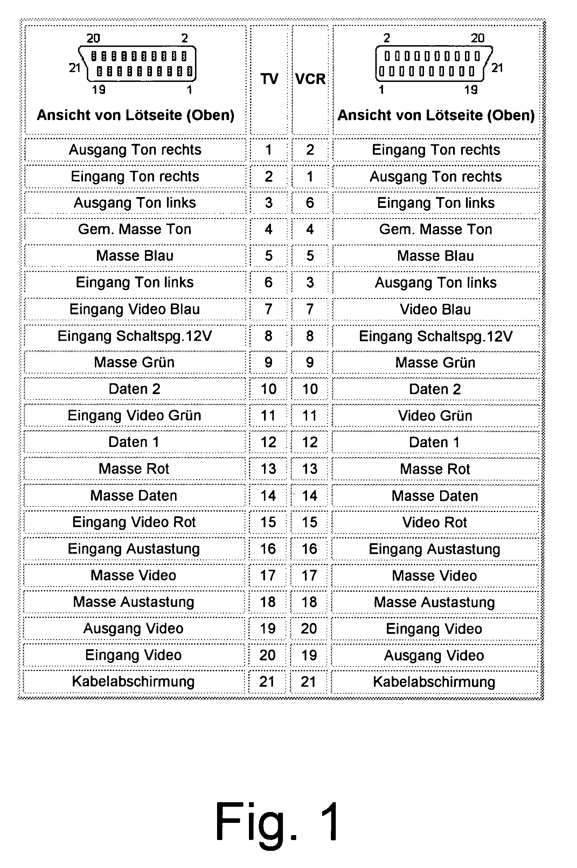

Ein SCART-Anschluss umfasst 20 Pins und eine Kabelabschirmung. Die Form eines SCART-Anschlusses und die Belegung der einzelnen Pins ist in Fig. 1 dargestellt. Durch den seitlichen Vorsprung und die versetzte Anordnung der Kontakte wird ein falsches Zusammenstecken verhindert.

Heimvideogeräte weisen vermehrt nur noch einen SCART-Anschluß anstelle eines Composite- und/oder S-Video-Anschlusses auf. Zum Anschluss von PCs an Heimvideogeräte wird der S-Video-Ausgang oder der Composite-Video-Ausgang des PCs über einen Adapter mit der SCART-Buchse des Videogerätes verbunden.

Nachteilig an dieser herkömmlichen Verbindung eines PCs mit einem Unterhaltungselektronikgerät ist die Zwischenschaltung eines Adapters. Da dem SCART-Anschluß ein Bildsignal zugeführt wird, das ursprünglich über einen Composite- oder S-Video-Anschluss ausgegeben wurde, kann außerdem über eine solche Verbindung die mögliche Bildqualität eines SCART-Signals nicht erreicht werden, so dass die Bildfehler des Composite- oder S-Video-Signals auch in dem SCART-Signal enthalten sind. Ein weiterer Nachteil liegt in der aufwändigen separaten Verbindung des Adapters mit einem Videoausgang und zusätzlich einem Audioausgang des PCs.

Aufgabe der Erfindung ist es, einen Computer und ein Computergehäuse anzugeben, die eine einfachere Ausgabe eines Bildsignals höherer Bildqualität ermöglichen.

Diese Aufgabe wird mit den Merkmalen der unabhängigen Ansprüche gelöst.

Gemäß einem ersten Aspekt der Erfindung wird ein Computer angegeben, der ein Gehäuse und eine Recheneinheit zur Ausgabe eines Bildsignals über eine an den Computer anschließbare Bildwiedergabevorrichtung umfasst. An dem Gehäuse des Computers ist eine Steckvorrichtung montiert, die zur Ausgabe des Bildsignals dient. Das Bildsignal wird in Form einer Rot-, Grün- und Blaukomponente über jeweils ein separates Kontaktelement der Steckvorrichtung ausgegeben.

Gemäß einem weiteren Aspekt der Erfindung wird ein Computergehäuse angegeben, an dem eine Steckvorrichtung zur Ausgabe eines Bildsignals montiert ist. Zur Ausgabe des Bildsignals in Form einer Rot-, Grün- und Blaukomponente ist in der Steckvorrichtung jeweils ein separates Kontaktelement vorgesehen, um das Bildsignal an eine an den Computer anschließbare Bildwiedergabevorrichtung auszugeben.

Erfindungsgemäß ist der Computer mit einer Schnittstelle zur Ausgabe eines Bildsignals versehen, bei der das Bildsignal über mehrere Kontaktelemente in einfacher Weise und mit hoher Qualität übertragen werden kann. Zu diesem Zweck werden die Bildsignalkomponenten nicht wie herkömmlich in ein einziges Signal integriert, sondern das Bildsignal wird in Form einer Rot-, Grün- und Blaukomponente über Anschlüsse einer einzigen Steckvorrichtung ausgegeben. Dadurch kann in einfacher Weise ein PC mit einem Videogerät verbunden werden, wobei das Bildsignal mit hoher Qualität übertragen werden kann.

Vorzugsweise ist die Steckvorrichtung mit einem zusätzlichen Kontaktelement ausgestattet, über das gleichzeitig ein Audiosignal ausgebbar ist. Ein solcher Computer kann schnell und in einfacher Weise ein Audio- und ein Videosignal über einen Steckkontakt mit hoher Qualität ausgeben.

Gemäß einer bevorzugten Ausführungsform sind wenigstens zwei Kontaktelemente zur Ausgabe eines Stereo-Audiosignals vorgesehen. Über eine Buchse können deshalb Audio- und Videosignale hoher Qualität in einfacher Weise übertragen werden. Es ist nicht erforderlich, Audio- und Videosignale über separate Steckverbindungen mit einem Unterhaltungselektronikgerät zu verbinden. Durch die separate Übertragung aller Audio- und Videokomponenten über einen einzigen Stecker können die Signale mit hoher Qualität übertragen und ausgegeben werden. Durch Verwendung eines einzigen Steckers für Audio- und Videosignale ist die Herstellung einer Verbindung mit einem weiteren Gerät schnell und in einfacher Weise erreichbar.

Vorzugsweise ist ein Kontaktelement der Steckvorrichtung zur Übertragung eines Synchronisationssignals vorgesehen. Gemäß einer besonders bevorzugten Ausführungsform wird dasselbe Kontaktelement in einer anderen Betriebsart zur Ausgabe eines Composite-Bildsignals verwendet. Dieselbe Steckvorrichtung lässt sich daher in einfacher Weise unterschiedlichen Systemanforderungen anpassen.

Vorzugsweise enthält der Computer eine Detektionsvorrichtung, mit der automatisch erkannt werden kann, ob eine RGB-fähige Bildwiedergabevorrichtung angeschlossen ist. In Abhängigkeit von dem Detektionsergebnis wird entweder das Synchronisationssignal oder das Composite-Signal über dasselbe Kontaktelement ausgegeben. Ohne Zutun des Benutzers passt sich die Ausgabeschnittstelle des Computers somit automatisch an die Fähigkeiten des angeschlossenen Gerätes an. Bei Anschluss einer RGB-fähigen Bildwiedergabevorrichtung gibt der Computer die Synchronisationssignale aus, ist keine RGB-fähige Bildwiedergabevorrichtung angeschlossen, gibt der Computer das Composite-Signal aus.

Vorzugsweise ist die Steckvorrichtung gemäß dem SCART-Standard ausgebildet. Ein SCART-Anschluss ermöglicht die einfache Verbindung mit einem Unterhaltungselektronikgerät, beispielsweise einem Fernsehgerät. Über handelsübliche SCART-Kabel kann der Computer in einfacher Weise an ein Unterhaltungselektronikgerät angeschlossen werden. Aufgrund der großen Verbreitung von SCART-Anschlüssen bei Unterhaltungselektronikgeräten entfallen damit bisher erforderliche Adapter, so dass der Computer nahtlos in die AudioNideosignalverarbeitung bekannter Unterhaltungselektronikgeräte mit hoher Bildqualität integrierbar ist.

Vorzugsweise ist die Steckvorrichtung des Computers sowohl mit dem Motherboard als auch einer Grafikkarte des Computers über jeweils separate Kabel verbunden. Um eine hohe Qualität der ausgegebenen Videosignale zu ermöglichen, umfasst die Grafikkarte wenigstens drei Digital/Analog-Wandler zur Umwandlung der digitalen Bildkomponentensignale in analoge Bildkomponentensignale zur Ausgabe über die Steckvorrichtung. Über einen weiteren Digital/Analog-Wandler kann ein RGB-Synchronisationssignal in ein analoges Synchronisationssignal umgewandelt werden.

Bevorzugte Ausführungsformen der Erfindung sind Gegenstand der Unteransprüche.

Im Folgenden wird die vorliegende Erfindung anhand bevorzugter Ausführungsformen unter Bezugnahme auf die Figuren näher erläutert.
- Fig. 1: zeigt eine Übersicht über die Pin-Belegung einer Steckvorrichtung gemäß SCART-Standard.
- Fig. 2: zeigt eine Aufsicht auf eine bevorzugte Ausführungsform des Computers zur Ausgabe von Videosignalen.
- Fig. 3: zeigt einen Ausschnitt einer Rückansicht eines Desktop-Computers mit einer erfindungsgemäßen Video/Audio-Schnittstelle.
- Fig. 4: zeigt eine Gesamtansicht der Rückseite eines erfindungsgemäßen Desktop-Computers.
- Fig. 5: zeigt eine Aufsicht auf ein Motherboard und eine Grafikkarte eines erfindungsgemäßen Computers, die zur Ausgabe von Video- und Audiosignalen mit einer erfindungsgemäßen Steckvorrichtung verbunden sind.
- Fig. 6: zeigt eine Ansicht des Innenaufbaus eines erfindungsgemäßen Computers.

Figur 1 zeigt die standardmäßige Pin-Belegung eines SCART-Anschlusses. Von den insgesamt 20 verschiedenen Pins des SCART-Anschlusses werden erfindungsgemäß nicht alle verwendet, sondern vorzugsweise die Pins 1 und 3 zur Ausgabe eines Stereo-Audiosignals, die Pins 7, 11 und 15 zur Ausgabe der blauen, grünen und roten Videosignalkomponente, der Pin 16 zur Ausgabe eines RGB-Statussignals und der Pin 19 zur Ausgabe entweder eines Composite-Videosignals oder eines RGB-Synchronisationssignals.

Gemäß einer bevorzugten Ausführungsform erkennt der Computer, insbesondere die in dem Computer angeordnete Grafikkarte, automatisch, ob an den SCART-Anschluss ein RGB-fähiges Gerät angeschlossen ist. Für den Fall, dass der Anschluss eines RGB-fähigen Gerätes erkannt wird, wird das Videosignal zusammen mit einem Synchronisationssignal über die Pins 7, 11, 15 und 19 ausgegeben. Solange kein RGB-fähiges Gerät am SCART-Anschluss detektiert wird, wird über den Pin 19 das Composite-Signal ausgegeben. Die Stereo-Audiosignale werden unabhängig vom Detektionsergebnis über die Pins 1 und 3 ausgegeben.

Eine Ansicht einer SCART-Buchse in dem Gehäuse eines Computers ist in Fig. 2 dargestellt. In der Außenseite des Computergehäuses, vorzugsweise der Rückseite 210 des Gehäuses, ist die SCART-Buchse 220 montiert. In der gezeigten Ausführungsform sind zusätzlich zu der SCART-Buchse 220 ein Composite-Ausgangsanschluss 230 und ein S-Video-Ausgangsanschluss 240 vorgesehen. Der Computer ist damit besonders flexibel einsetzbar und stellt für jede Anwendung das geeignete Video-Ausgangssignal mit bester Qualität bereit.

Vorzugsweise werden das Video- und Audio-Ausgangssignal über die Steckkontakte der SCART-Buchse 220 ausgegeben. Der SCART-Anschluß ermöglicht eine Signalausgabe mit höchster Signalqualität und erlaubt eine einfache Verbindung mit einem Unterhaltungselektronikgerät. Die beiden anderen Ausgangsanschlüsse erfordern dagegen zusätzlich eine separate Verbindungsleitung zur Übertragung des Audiosignals.

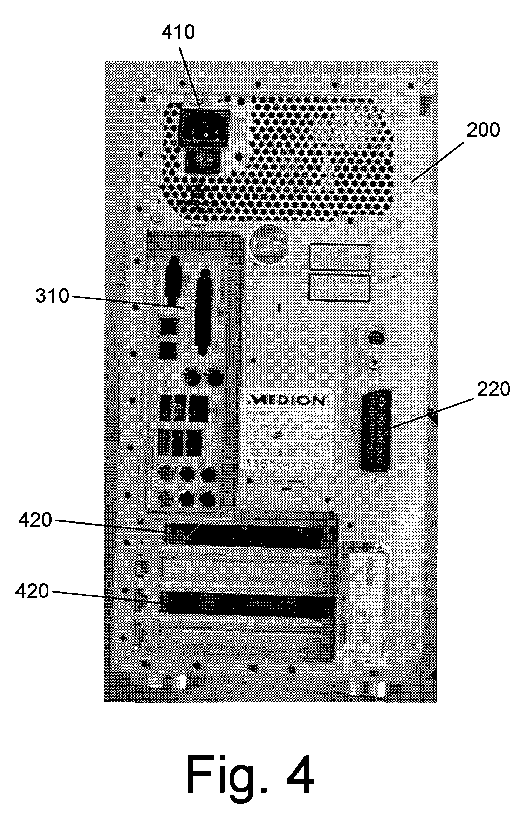

Fig. 3 zeigt einen Ausschnitt einer Rückansicht des Computergehäuses eines Desktop-Computers. Auf der Rückseite 210 ist neben einem herkömmlichen Schnittstellenfeld 310 mit computertypischen Anschlüssen eine SCART-Buchse 220 vorgesehen. Eine Gesamtansicht der Rückseite 210 eines Desktop-Computergehäuses 200 ist Fig. 4 gezeigt. Zusätzlich sind ein Netzanschluss 410 und Anschlussöffnungen für Einsteckkarten an Standardsteckplätzen 420 zu erkennen. Obwohl die Figuren nur einen Desktop-Computer, d.h. einen stationären Computer zeigen, ist die erfindungsgemäße SCART-Schnittstelle in entsprechender Weise am Gehäuse eines tragbaren, d.h. Notebook-Computers einsetzbar. Bei Notebook-Computern ist die SCART-Buchse vorzugsweise auf der Rückseite angeordnet.

Herkömmlich wird die Funktionalität von Computern über Steckkarten erweitert, die in Steckplätze 420 eingesetzt werden. Mit Hilfe solcher Steckkarten kann ein von einem Computer ausgegebenes Signal über eine entsprechende Schnittstelle an unterschiedliche Ausgabestandards angepasst werden. Auf der Rückseite des Computers steht über die Steckplätze 420 eine entsprechende Anschlussmöglichkeit zur Verfügung.

Aufgrund der normierten Größe einer SCART-Buchse 220 kann diese jedoch nicht über eine Steckkarte in einen herkömmlichen PC integriert werden. Ein SCART-Anschluss ist nicht wie eine AGP-Grafikkarte oder eine PCI-Karte in einen Standard-Slot eines Computergehäuses einsetzbar, und zwar wegen der Breite des SCART-Steckers. Ein herkömmliches Standard-PC-Gehäuse bietet deshalb keine Möglichkeit zur Ausgabe hochqualitativer Videosignale.

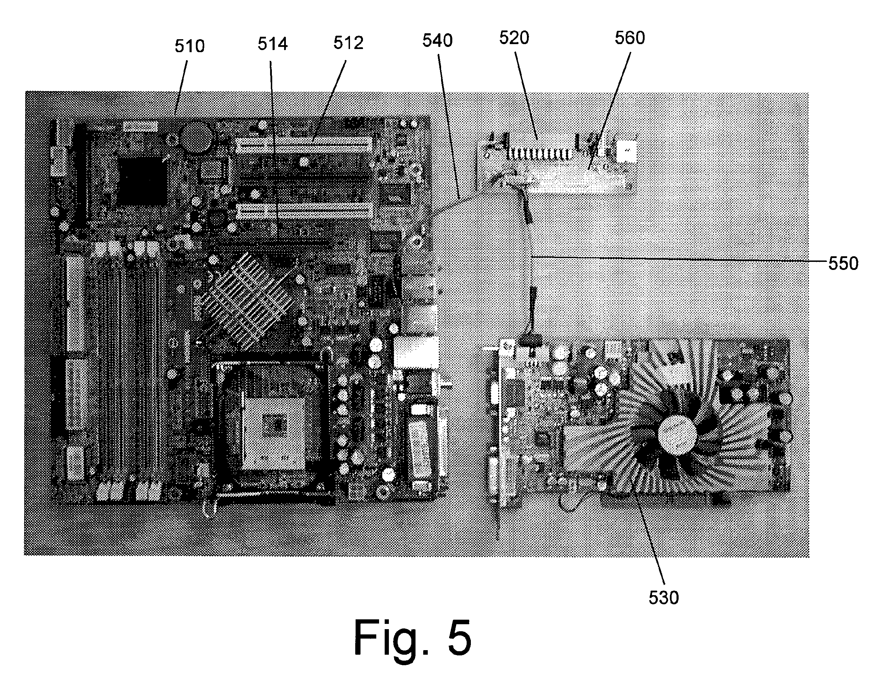

Erfindungsgemäß ist an der Rückseite eines PC-Gehäuses 200 eine spezielle Öffnung mit Anschraubpunkten für ein SCART-Modul vorgesehen. Das Modul ist an der entsprechenden Stelle auf der Innenseite des Gehäuses montiert. In Fig. 5 sind das SCART-Modul 560 und die mit diesem verbundenen PC-Komponenten dargestellt. Während die Grafikkarte 530 des PCs über eine Leitung 550 mit dem SCART-Modul 560 zur Übertragung des Videosignals verbunden ist, ist das Motherboard 510 über eine Leitung 540 zur Ausgabe des Audiosignals mit dem SCART-Modul 560 verbunden. Das SCART-Modul gibt das Videosignal der Grafikkarte 530 und das Audiosignal des Motherboards 510 über die Steckvorrichtung 520 aus.

Vorzugsweise ist die Grafikkarte mit einer automatischen Erkennung der Wiedergabemöglichkeiten des angeschlossenen Ausgabegerätes ausgestattet. Je nach vorhandenen Wiedergabemöglichkeiten des angeschlossenen Unterhaltungselektronikgerätes schaltet die Grafikkarte zwischen den entsprechenden Wiedergabemodi um, insbesondere zwischen SCART-RGB und SCART-Composite.

In Fig. 2 ist dargestellt, dass gemäß einer bevorzugten Ausführungsform der Computer bzw. das Computergehäuse neben der SCART-Buchse 220 zusätzlich eine Composite-Buchse 230 und eine S-Videobuchse 240 aufweist. Vorzugsweise erkennt die Grafikkarte, über welchen der Anschlüsse ein Gerät welcher Funktionalität angeschlossen ist und schaltet dementsprechend zwischen SCART-RGB, SCART-Composite, S-Video und Composite um.

Ein Composite-Bildsignal wird im allgemeinen von allen Bildwiedergabevorrichtungen unterstützt. Ist die Bildwiedergabevorrichtung jedoch in der Lage, auch Bildsignale höherer Qualität zu empfangen und wiederzugeben, so schaltet der PC bei der Übertragung über die SCART-Verbindung automatisch zwischen einem Composite-Videosignal und einem RGB-Videosignal um. Auf diese Weise ist sichergestellt, dass über die SCART-Verbindung immer ein Bild auf der angeschlossenen Wiedergabevorrichtung darstellbar ist, das die jeweils beste mögliche Bildqualität aufweist.

Die Übertragung eines RGB-Signals über die SCART-Verbindung wird der Bildwiedergabevorrichtung über das "RGB-Statussignal" signalisiert. Das Statussignal wird über den Pin 16 des SCART-Anschlusses übertragen (vgl. Fig. 1). Ist die Bildwiedergabevorrichtung in der Lage, ein RGB-Signal zu empfangen und wiederzugeben, werden von der Wiedergabevorrichtung, also beispielsweise einem Fernsehgerät, die entsprechenden RGB-Eingänge (Pins 7, 11 und 15) aktiv geschaltet.

Die Aktivschaltung der RGB-Eingänge auf der Wiedergabeseite, also z.B. im Fernsehgerät, kann im PC an der Belastung der entsprechenden Signalleitungen (Pins 7, 11 und 15) erkannt werden. Zu diesem Zweck wird der durch einen oder mehrere der RGB-Kontakte fließende Strom erfasst und mit einem gespeicherten Wert verglichen.

Sobald der PC die Belastung der RGB-Signalleitungen erkannt hat, werden die entsprechenden RGB-Pins des SCART-Anschlusses zur Bildausgabe verwendet. Zusätzlich wird bei der RGB-Übertragung ein RGB-Synchronisationssignal über den Pin 19 übertragen.

Wird eine RGB-Signalübertragung von der Wiedergabevorrichtung nicht unterstützt, sind die entsprechenden Signaleingänge (Pins 7, 11 und 15) offen und damit nicht belastet. Die Nicht-Belastung der RGB-Pins wird von dem PC (vorzugsweise der Graphikkarte des PCs) erkannt und dementsprechend die RGB-Ausgabe abgeschaltet. Stattdessen wird auf den Pin 19 ein Compositesignal geschaltet und zur Wiedergabevorrichtung übertragen.

In entsprechender Weise kann der PC alle Bildsignale umschalten, die an die in Fig. 2 gezeigten Anschlüsse anlegbar sind.

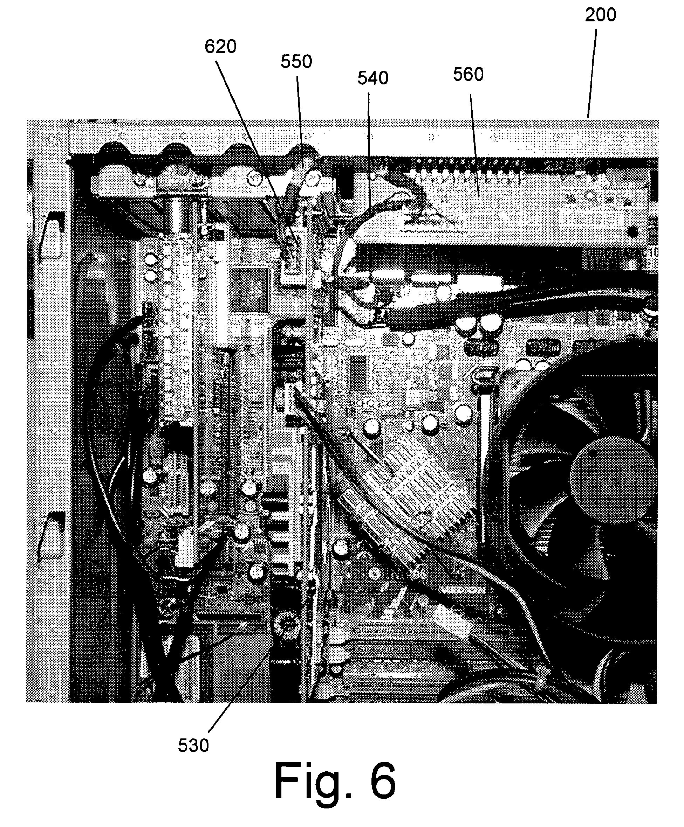

Bei der Integration der Grafikkarte 530 und des Motherboards 510 in ein Computergehäuse wird die Grafikkarte vorzugsweise in einen Aufnahmeschacht 512, 514 des Motherboards 510 eingesetzt. Die Grafikkarte 530 ist in einen der Aufnahmeslots 512, 514 eingesetzt, gemäß Fig. 6 in den AGP-Slot 514. Die Graphikkarte 530 ist nicht auf einen bestimmten Slot-Standard beschränkt, sondern kann in jeden zur Aufnahme einer Graphikkarte geeigneten Slot eingesetzt werden, beispielsweise in einen PCI-, AGP-, PCI-Express- oder anderen Slot-Typ. Alternativ kann die Funktionalität der Graphikkarte auch direkt in das Motherboard integriert werden.

Eine Innenansicht des Computergehäuses 200 mit dem montierten SCART-Modul 560 ist in Fig. 6 wiedergegeben. Das SCART-Modul 560 ist so montiert, dass die Verbindungsleitung 540 zwischen der Grafikkarte und dem SCART-Modul 550 besonders kurz ist. Vorzugsweise ist die Kabelverbindung 550 zwischen dem SCART-Modul 560 an einem Ende an dem SCART-Modul angelötet und an dem anderen Ende mit der Grafikkarte 530 über einen Stecker 620 verbindbar.

Zusammenfassend betrifft die Erfindung einen Computer mit einem SCART-Anschluss zur einfachen Ausgabe hochqualitativer Audio- und Videosignale an ein Unterhaltungselektronikgerät, insbesondere ein Fernsehgerät. Durch die Verwendung eines Steckanschlusses mit separaten Pins für jede Videosignalkomponente in einer einzigen Steckvorrichtung ist ein Bildsignal hoher Qualität in einfacher Weise ausgegebbar.

## Patentansprüche

1. Computer mit einem Gehäuse (200) und einer Recheneinheit zur Ausgabe eines Bildsignals über eine an den Computer anschließbare Bildwiedergabevorrichtung
**gekennzeichnet durch**
eine an dem Gehäuse (200) des Computers montierte Steckvorrichtung (220), die zur Ausgabe des Bildsignals in Form einer Rot-, Grün- und Blaukomponente jeweils ein separates Kontaktelement für jede der Bildsignalkomponenten aufweist.

2. Computer nach Anspruch 1, wobei der Computer außerdem ein Audiosignal über ein zusätzliches Kontaktelement derselben Steckvorrichtung (220) ausgibt.

3. Computer nach Anspruch 1 oder 2, wobei die Steckvorrichtung (220) eine Buchse mit einer Mehrzahl von Kontaktelementen zur Aufnahme von Pins eines entsprechenden Steckers aufweist.

4. Computer nach Anspruch 3, wobei wenigstens ein Kontaktelement für jede Bildsignalkomponenten vorgesehen ist.

5. Computer nach Anspruch 2, wobei wenigstens ein zusätzliches Kontaktelemente für das Audiosignal vorgesehen ist.

6. Computer nach Anspruch 5, wobei insgesamt wenigstens zwei Kontaktelemente zur Ausgabe eines Stereo-Audiosignals vorgesehen sind.

7. Computer nach einem der Ansprüche 3 bis 6, wobei wenigstens ein Kontaktelement für ein RGB-Synchronisationssignal vorgesehen ist.

8. Computer nach Anspruch 7, wobei das Kontaktelement der Steckvorrichtung (220) für die Ausgabe des RGB-Synchronisationssignals außerdem zur Ausgabe des Bildsignals in Form eines Composite-Signals dient.

9. Computer nach einem der Ansprüche 1 bis 8 mit einer Detektionsvorrichtung zur automatischen Erkennung des Anschlusses einer RGB-fähigen Bildwiedergabevorrichtung an die Steckvorrichtung (220).

10. Computer nach Anspruch 9, wobei der Computer in Abhängigkeit von dem Detektionsergebnis der Detektionsvorrichtung entweder das RGB-Synchronisationssignal oder das Composite-Signal ausgibt.

11. Computer nach Anspruch 10, wobei der Computer zur Ausgabe des RGB-Synchronisationssignals bei Anschluss einer RGB-fähigen Bildwiedergabevorrichtung eingerichtet ist.

12. Computer nach Anspruch 10 oder 11, wobei der Computer zur Ausgabe des Composite-Signals über die Kontaktelemente des RGB-Synchronisationssignals eingerichtet ist, wenn keine RGB-fähige Bildwiedergabevorrichtung angeschlossen ist.

13. Computer nach einem der Ansprüche 9 bis 12, wobei die Detektionsvorrichtung zur Erkennung der RGB-Fähigkeit der Bildwiedergabevorrichtung einen Stromsensor zur Erfassung der elektrischen Belastung der zur Übertragung der Rot-, Grün- und/oder Blaukomponente verwendeten Kontaktelemente umfasst.

14. Computer nach einem der Ansprüche 9 bis 13, wobei die Detektionsvorrichtung Teil der Graphikkarte des Computers ist.

15. Computer nach einem der Ansprüche 1 bis 14, wobei die Steckvorrichtung gemäß dem SCART-Standard ausgebildet ist.

16. Computer nach einem der Ansprüche 1 bis 15, wobei die Recheneinheit des Computers ein Motherboard (510) und eine Graphikkarte (530) umfasst und die Steckvorrichtung (220) auf der Gehäuseinnenseite über separate Kabel (540, 550) sowohl mit dem Motherboard (510) als auch der Graphikkarte (530) verbunden ist.

17. Computer nach einem der Ansprüche 1 bis 16, wobei die Recheneinheit des Computers eine Graphikkarte (530) umfasst und die Graphikkarte (530) des Computers wenigstens drei Digital/Analog-Wandler zur Umwandlung der digitalen Bildkomponentensignale in analoge Bildkomponentensignale aufweist.

18. Computer nach Anspruch 17, wobei die Graphikkarte (530) einen weiteren Digital/Analog-Wandler zur Umwandlung eines digitalen RGB-Synchronisationssignals in ein analoges Synchronisationssignal aufweist.

19. Computer nach einem der Ansprüche 1 bis 18, wobei die Pin-Belegung der Steckvorrichtung (220) gemäß der SCART-Nummerierung wie folgt ist:
Pin 1 - Audioausgang, rechts,
Pin 3 - Audioausgang, links,
Pin 7 - Blausignalausgang des RGB-Signals,
Pin 11- Grünsignalausgang des RGB-Signals,
Pin 15- Rotsignalausgang des RGB-Signals,
Pin 16- RGB-Statussignalausgang und
Pin 19- Composite-Signalausgang / RGB-Synchronisationssignal.

20. Computergehäuse mit einer an dem Gehäuse (200) des Computers montierten Steckvorrichtung (220) zur Ausgabe eines Bildsignals in Form einer Rot-, Grün- und Blaukomponente über jeweils ein separates Kontaktelement der Steckvorrichtung (220) an eine an den Computer anschließbare Bildwiedergabevorrichtung.
